# EUROPEAN PATENT APPLICATION

(11) **EP 3 597 928 A1**
(43) Date of publication of application: **22.01.2020**
(21) Application number: 19182258.4
(22) Date of filing: 25.06.2019
(51) Int. Cl.: F04D 29/32, F01D 5/14, F02C 7/04, F02K 3/06

(54) **FAN UNIT FOR A TURBOFAN ENGINE COMPRISING VORTEX-GENERATING ELEMENTS**

(30) Priority: 16.07.2018 GB 201811612; 17.07.2018 GR 20180100329; 31.08.2018 GB 201814187
(71) Applicant: Rolls-Royce plc, London SW1E 6AT (GB)
(72) Inventor: Kovanis, Anastasios, Derby, Derbyshire DE24 8BJ (GB)
(74) Representative: Rolls-Royce plc

(57) **Abstract**

A fan unit (112) for a turbofan engine comprises a plurality of fan blades (133) mounted to a fan disc unit (131, 132, 148) and a plurality of vortex-generating elements (133) each of which is arranged to generate a respective vortex extending axially between a respective pair of adjacent fan blades during rotation of the fan unit about its rotation axis. During operation of a turbofan engine comprising the fan unit, fan-wake-induced mechanical degradation of compressor blades in a compressor downstream of the fan unit is eliminated, or the rate at which such degradation occurs is reduced.

## Description

### TECHNICAL FIELD

Examples of fan units for a turbofan engine are described.

### BACKGROUND

During operation of a turbofan engine, the wake produced by the fan of the engine under certain conditions of speed, temperature and altitude can cause an enhanced rate of mechanical degradation of compressor blades comprised in the compressor immediately downstream of the fan (i.e. the first compressor of the engine arrived at moving downstream from the fan). In such a case, the compressor blades will have to be replaced earlier than is usual. The susceptibility of a particular compressor blade to such enhanced mechanical degradation typically depends on several factors such as its material properties, physical dimensions, location in the compressor and angle of inclination to the engine centre-line, and is therefore difficult or impossible to predict a *priori.* Compressor blades in other compressors of an engine may also be affected by this problem.

### BRIEF SUMMARY

According to an example, a fan unit for a turbofan engine comprises a plurality of fan blades mounted to a fan disc unit and a plurality of vortex-generating elements each of which is arranged to generate a respective vortex extending axially between a respective pair of adjacent fan blades during rotation of the fan unit about its rotation axis.

An outer surface of the fan disc unit may define an inner annulus profile surface of the fan unit with each of the vortex-generating elements being arranged to generate a vortex extending axially between a respective pair of adjacent fan blades at or adjacent the inner annulus profile surface during rotation of the fan unit about its rotation axis. Each vortex-generating element may be located axially upstream of the leading edges of a respective pair fan blades.

Each vortex-generating element may be located in azimuth between azimuthal positions of a respective pair of adjacent fan blades. The number of vortex-generating elements may be equal to the number of fan blades. Alternatively, where the fan unit has n fan blades and n is even, there may be n/2, n/3 or n/4 vortex-generating elements, with one vortex-generating element being located in azimuth between the azimuthal positions of the roots of every second, third, or fourth pair of fan blades respectively. The vortex-generating elements may be uniformly distributed in azimuth.

The vortex-generating elements may each be arranged to generate a respective vortex which rotates in the same sense as vortices generated at the suction sides of the fan blades during rotation of the fan unit about its rotation axis. Alternatively they may each be arranged to generate a respective vortex which rotates in the opposite sense as vortices generated at the suction sides of the fan blades during rotation of the fan unit about its rotation axis.

Each vortex-generating element may comprise a laminar element which extends radially outwards from an inner annulus profile surface defined by an outer surface of the fan disc unit and extends axially between a first axial position and a second axial position such that the path defined by the intersection of the laminar element and the inner annulus profile surface is inclined along its length to a plane passing through the laminar element and including the rotation axis of the fan unit. The first and second axial positions may be upstream of the fan blades. Each vortex-generating element may be located in azimuth between a respective pair of fan blades.

The paths defined by the intersections of the laminar elements and the inner annulus profile surface may be curved and each laminar element is locally normal to the inner annulus profile surface.

Alternatively, the paths defined by the intersections of the laminar elements and the inner annulus profile surface may be straight and each laminar element may be planar. The laminar elements may each be locally normal to the inner annulus profile surface. Each laminar element may extend axially between a common first axial position and a common second axial position. The intersection of any given laminar element and the inner annulus profile surface may define a straight path which is inclined at an angle θ to a plane passing through the laminar element and including the rotation axis of the fan, where -35° ≤ θ ≤ +90°.

The common first axial position may be upstream of the common second axial position and the radial span of any given laminar element with respect to the inner annulus profile surface may increase linearly with axial position from a first value at the first axial position to a second value at the second axial position. The outer radial edge of each laminar element may be locally inclined to the inner annulus profile surface at angle α in the range 0° ≤ α ≤ 45°.

The common first axial position may be upstream of the common second axial position and the radial span of any given laminar element with respect to the inner annulus profile surface may have a first value at the first axial position, a second value at the second axial position, increase linearly with axial position from the first value at the first axial position to the second value at an intermediate axial position which is intermediate the first and second axial positions and remain constant and equal to the second value between the intermediate axial position and the common second axial position.

Alternatively, the common first axial position may be upstream of the common second axial position and the radial span of any given laminar element with respect to the inner annulus profile may have a first value at the first and second common axial positions, increase linearly with axial position from the first value at the first common axial position to a second value at a first intermediate axial position, remain constant and equal to the second value between the first intermediate axial positon and a second intermediate axial position downstream of the first intermediate axial position, and decrease linearly with axial position from the second value to the first value between the second intermediate axial position and the common second axial position.

The maximum radial span of the laminar elements with respect to the inner annulus profile surface may be less than or equal to 20% of the radial span of the fan blades with respect to the inner annulus profile surface.

The fan unit may comprise a plurality of annulus fillers each of which extends in azimuth between a respective pair of fan blades, the outer surfaces of the annulus fillers collectively forming an outer surface of the fan disc unit, which outer surface defines an inner annulus profile surface of the fan disc unit, and each vortex-generating element being attached to or integral with an annulus filler and extending radially outwards from the outer surface of the annulus filler. Alternatively, each vortex-generating element may be attached to or integral with the nose-cone of the fan unit. According to an example, a nose-cone for a fan unit comprises a plurality of vortex-generating elements each of which is arranged to generate a respective vortex during rotation of the nose-cone about its rotation axis. Preferred embodiments are defined in the dependent claims.

According to other examples, a turbofan engine comprises a fan unit or a nose-cone as described herein and a fan unit comprising a nose-cone as described herein.

Except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments are described below by way of example only, with reference to the figures in which:
- Figure 1: shows a longitudinal section of a known turbofan engine;
- Figure 2: shows a longitudinal section of a fan unit according to an example;
- Figure 3: shows a portion of a longitudinal section through the Figure 2 fan unit;
- Figure 4: shows a plan view of portion of the Figure 2 fan unit;
- Figures 5, 6 & 7: shows perspective, side and end views respectively of a vortex-generating element comprised in the Figure 2 fan system;
- Figures 8 & 9: show side and end views respectively of an alternative vortex-generating element;
- Figures 10 & 11: show side and end views respectively of another alternative vortex-generating element;
- Figure 12: shows a plan view of a portion of a fan unit according to another example; and
- Figure 13: schematically shows the locations of vortex-generating elements within three other example fan units.

### DETAILED DESCRIPTION

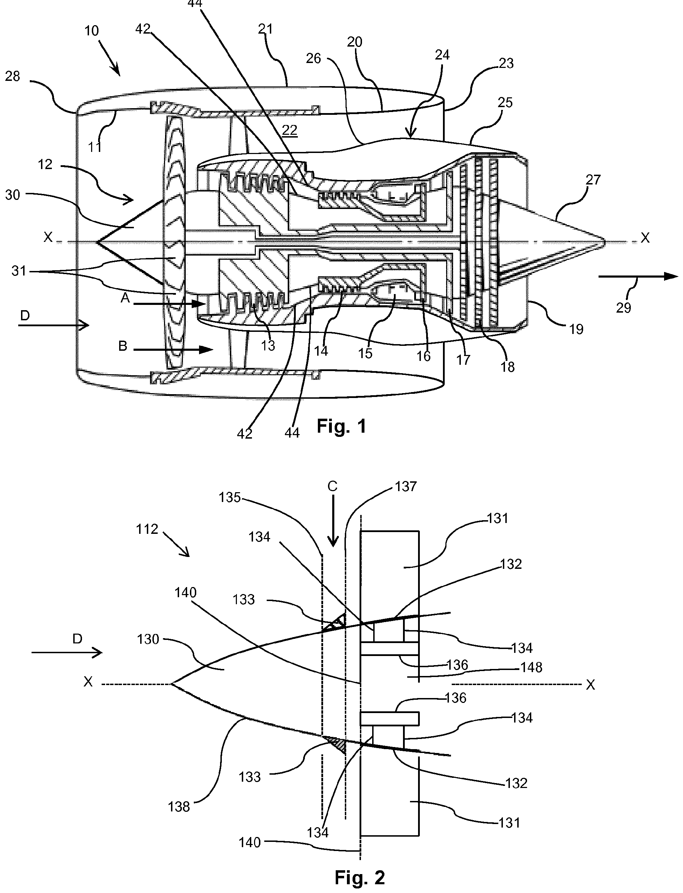

Referring to Figure 1, a known three-spool, separate-jets, turbofan engine 10 having a longitudinal (rotational) axis X comprises an engine core 24 having a core cowling 25 located radially inwardly of an outer fixed structure 21 with respect to the axis X. The outer fixed structure 21 terminates at its downstream end in a downstream terminal plane 23 which is substantially normal to the axis X. The portion of the core cowling 25 upstream of the terminal plane 23, and the internal surface of the outer fixed structure 21 which longitudinally coincides with that portion respectively define inner 26 and outer 20 walls of a bypass duct 22 which terminates at a bypass duct exit plane coincident with the downstream terminal plane 23 of the outer fixed structure 21. The engine core 24 extends downstream of the bypass duct exit plane 23 so that the engine core 24 has an afterbody portion. The engine core 24 terminates at a core exit plane 19 which is also substantially normal to the axis X. The engine 10 has a fan unit 12, intermediate 13 and high 14 pressure compressors, combustion equipment 15, and high 16, intermediate 17 and low 18 pressure turbines. A centre-body 27 extends through the core exit plane 19. The outer fixed structure has an intake highlight 28.

The engine 10 has a gas annulus defined by inner 42 and outer 44 gas annulus surfaces over the length (axial extent) of the core cowling 25. The inner gas annulus surface 42 is part of an inner gas annulus profile surface which extends upstream of the core cowling 25 and downstream of the core exit plane 19. Upstream of the core cowling 25 the inner gas annulus profile surface is defined by the fan unit 12. Downstream of the core exit plane 19 the inner gas annulus profile surface is defined by the outer surface of the centre-body 27.

The fan unit 12 comprises fan blades 31 mounted to a fan disc (not shown) and a plurality of annulus fillers (not shown) attached to the fan disc, the outer surface of each annulus filler extending axially and azimuthally between a respective pair of fan blades 31. The fan unit 12 also comprises a nose cone or spinner 30 attached to the upstream side of the fan disc. The external surface of the nose-cone 30 and the annulus fillers together define the inner gas annulus profile surface of the engine 10 of the fan unit 12. During operation of the engine 10, the fan unit 12 rotates clockwise when viewed from the front of the engine 10 (i.e. upstream of the engine 10) in the direction D.

During operation of the engine 10, air and combustion products pass through the engine 10 in a general direction indicated by 29. Air entering the outer fixed structure 21 at the front of the engine is accelerated by the fan unit 12. Downstream of the fan unit 12 this air becomes divided into two air flows: a first air flow A into the intermediate pressure compressor 13 and a second airflow B which passes through the bypass duct 22. The intermediate pressure compressor 13 compresses the air flow directed into it before delivering that air to the high pressure compressor 14 where further compression takes place. Air flow B is output from the bypass duct 22 at the bypass duct exit plane 23 and provides the majority of the engine's thrust.

Compressed air output from the high-pressure compressor 14 is directed into the combustion equipment 15 where it is mixed with fuel and the resulting mixture combusted. The resulting hot combustion products then expand through, and thereby drive the high, intermediate and low-pressure turbines 16, 17, 18 before being exhausted through the core exit plane 19 of the engine core 29 to provide further thrust. The high, intermediate and low pressure turbines 16, 17, 18 drive respectively the high pressure compressor 14, intermediate pressure compressor 13 and fan unit 12, each by means of a respective interconnecting shaft which has a rotation axis coincident with the longitudinal axis X of the engine 10.

Other gas turbine engines to which the present disclosure may be applied may have alternative configurations. For example, such engines may have an alternative number of compressors and/or turbines and/or an alternative number of interconnecting shafts. The fan unit of an engine may be driven via a gearbox.

Figure 2 shows a longitudinal section of an example fan unit 112 for a turbofan engine, the section including the longitudinal (rotation) axis X of the engine. The fan unit 112 comprises a nose-cone 130 attached to the upstream side of a fan disc 148. A plurality of fan blades 131 are mounted to the fan disc 148 such that each has a radial blade root position 136. The fan unit 112 further comprises a plurality of annulus fillers 132 each of which has an outer surface which extends axially and azimuthally between a respective pair of fan blades 131. Each annulus filler 132 has a pair of arms 134 which extend radially inwardly and by which the annulus filler 132 is attached to the outer surface of the fan disc 148. The inner gas annulus profile surface of the fan unit 112 is defined by the outer surfaces of the annulus fillers and also by the outer surface 138 of the nose-cone 130. The fan unit 112 is intended for rotation about the axis X in a clockwise direction when viewed from the front of the fan unit 112 in the direction D.

A plurality of vortex-generating elements 133 are attached the nose-cone 130. Each vortex-generating element 133 comprises a base portion, by which it is attached to the outer surface 138 of the nose-cone 130, and a planar, laminar portion which extends radially outwards from the external surface 138 of the nose-cone 130. The vortex generating elements 133 are evenly distributed in azimuth around the external surface 138 of the nose-cone 130 and each extends between a common first axial position 135 and a common second axial position 137, both of which are located axially upstream with respect to the axial position 140 of the leading edges of the fan blades 131, the common first axial position 135 being upstream of the common second axial position 137. The number of vortex-generating elements 133 is equal to the number of fan blades and each vortex-generating element 133 is located in azimuth between a respective pair of fan blades 131. The two vortex-generating elements 133 depicted in Figure 2 are thus not in the plane of Figure 2 because the vortex-generating elements 133 are offset in azimuth with respect to the fan blades 133. The planar, laminar portion of each vortex-generating element 133A, 133B is inclined to the plane of Figure 2. When viewed from a direction C radially inwards towards the axis X, the planar, laminar portion of each vortex-generating element 133 has a clockwise rotational offset with respect to a plane which passes through the portion and includes the axis X. The planar, laminar portion of each vortex-generating element 133 is locally normal to the surface 138, i.e. the plane of any such portion is normal to the outer surface 138 of the nose-cone 130 where the portion joins with the outer surface 138.

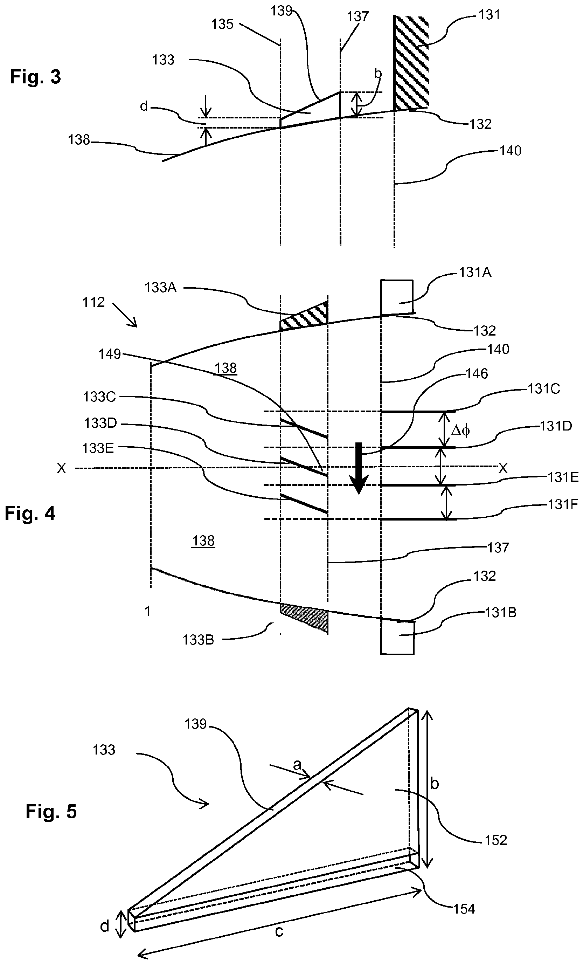

Figure 3 shows a portion of a longitudinal section through the fan unit 112 of Figure 2, in the plane the planar, laminar portion of one of the vortex-generating elements 133. The position of a portion of a fan blade 131 is indicated in shading because the fan blade 131 is not in the plane of Figure 3. The outer surface 138 of the nose-cone 130 and the outer surface of an annulus filler 132 form the inner gas annulus profile surface of the fan unit 112. The vortex-generating element 133 has an outer radial edge 139 which is straight and locally inclined to the inner gas annulus profile surface at an angle in the range 10° to 40°. The radial span of the vortex-generating element 133 at a given axial position is the radial distance from the inner gas annulus surface to the outer radial edge 139 of the vortex-generating element 133 at that axial position. The radial span of the vortex-generating element 133 thus increases linearly with axial position from a first value d at the common first axial position 135 to a second value b at the common second axial position 137.

Figure 4 shows an elevation or plan view of a portion of the fan unit 112 of Figure 1, i.e. a view at right-angles to the axis X in the direction C indicated in Figure 1. The outer radial edges of three of the vortex-generating elements 133C, 133D, 133E are shown in relation to the positions of four fan blades 131C, 131D, 131E, 131F at the radial position of the annulus fillers 132. Each of the vortex-generating elements is located in azimuth between a respective pair of fan blades, for example element 133C is located in azimuth between the azimuthal positions of fan blades 131C and 131D. Each element 133 is located axially upstream of the axial position 140 corresponding to the leading edges of the fan blades 131. Elements 133A and 133B are located at azimuthal positions which are offset by ± 90° on the outer surface 138 of the nose-cone 130 with respect to the azimuthal position of the element 133D. If the fan unit 112 is considered to be rotating about the axis X (clockwise when viewed from the front of the fan unit 112 in the direction D shown in Figure 2), then element 131D has an instantaneous velocity indicated by arrow 146. The azimuthal interval between adjacent fan blades 131 is indicated by Δφ in Figure 4.

The planar, laminar portion of each vortex-generating element 133 is locally normal to the outer surface 138 of the nose-cone 130. In addition, the planar, laminar portion of any element 133 is inclined at a common angle to a respective plane passing through the portion and containing the axis X. Thus the planar, laminar portion of vortex-generating element 133D is inclined at an angle 149 to a plane normal to the plane of Figure 4 and passing through the axis X. The intersection of a given planar, laminar portion with the outer surface 138 of nose-cone 130 defines a path which is a straight line inclined at a common angle to the plane passing through the portion and containing the axis X. The common angle 149 between the planar, laminar portion of a given vortex-generating element such as 133D and a plane passing through the portion and containing the axis X may have any value between about -35° and about +90°, for example the angle 149 may have a value between +1° and +10°. As depicted in Figure 4, the angle 149 is positive. The angle 149 is 0° if the planar, laminar portion of a given vortex-generating element such as 133D lies in a plane containing the axis X and 90° if the planar, laminar portion is normal to a plane passing through the portion and containing the axis X.

Referring to Figures 5, 6 and 7, one of the vortex-generating elements 133 is shown in more detail. The elements 133 are all identical. The element 133 has a planar, laminar portion 152 extending radially outwards from the outer surface 138 of the nose-cone 130 and a base portion 154 by which it is attached to the outer surface 138. The planar, laminar portion 152 has a radial span d with respect to the outer surface 138 at the first common axial position 135 and a radial span b at the common second axial position 137. The radial span of the element 133 increases linearly between these two axial positions 135, 137 such that the outer radial edge 139 of the element 133 is locally inclined at an angle 151 between 0° and 45° (for example 25°) to the outer surface 138 of the nose-cone 130. The element 133 has a length c and thickness a. In one example, the dimensions a, b, c and d are 3 mm, 25 mm, 50 mm and 3 mm respectively. Since the plane of the portion 152 is inclined by less than about 10° to a plane passing through the portion 152 and containing the axis X, the axial separation of the common first and second positions 135, 137 is approximately c, or specifically c.cos θ where θ is the angle 149 between the planar, laminar portion 152 of a vortex-generating element 133 and a plane passing through the portion 152 and containing the axis X.

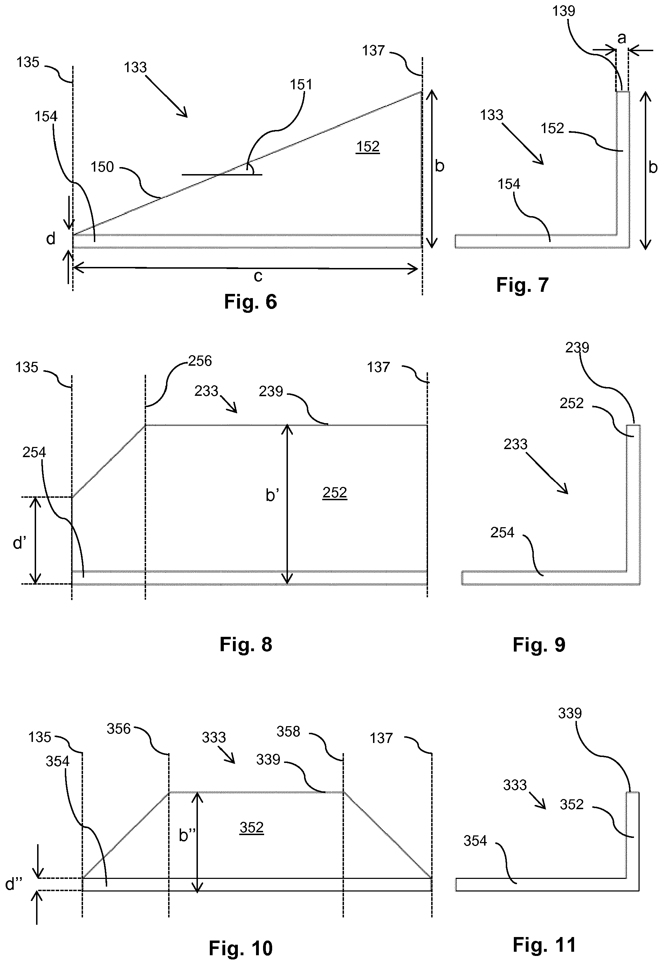

Figures 8 and 9 shows side and end views respectively of an alternative vortex-generating element 233 which comprises a planar, laminar portion 252 and a base portion 254 by which the element 233 may be attached to the outer surface 138 of the nose-cone 130. Each of the vortex-generating elements 133 in Figures 2, 3 and 4 may be substituted by a vortex-generating element such as 233. When the base portion 254 is attached to the outer surface 138, the planar, laminar portion 252 is normal to and extends radially outward from the outer surface 138 of the nose cone 130. The elements 233 may be located axially and in azimuth as described above in relation to the elements 133 and orientated such that each planar, laminar portion 252 is inclined at the same angle to a respective plane passing through the portion 252 and including the rotation axis X of the fan unit 112. The portion 252 has an outer radial edge 239 and extends between the common first 135 and second 137 axial positions. The radial span of the planar, laminar portion 252 increases from a first value d' at the common first axial position 135 to a second value b' at an axial position 256 intermediate the common first and second axial positions 135, 137 and is constant and equal to the second value b' between the intermediate axial position 256 and the common second axial position 137.

Figures 10 and 11 show side and end views respectively of a further alternative vortex-generating element 333. The vortex-generating element 333 has a base portion 354 by which it may be attached to the outer surface 138 of the nose-cone 130 and a planar, laminar portion 352 which is perpendicular to the base portion 354. When the base portion 354 is attached to the outer surface 138 of the nose-cone 130, the planar, laminar portion 352 extends radially outward from the surface 138 and is locally normal to the surface 138. Each of the vortex-generating elements 133 in Figures 2 to 4 may be substituted by a vortex-generating element such as 333. The vortex-generating elements 333 may be located axially and in azimuth as described above in relation to the vortex-generating elements 133, i.e. such that their planar, laminar portions 352 extend between the common first and second axial positions 135, 137 upstream of the axial position 140 corresponding to the leading edge of the fan blades 131. Each element 333 would be installed so that the planar, laminar portion 352 is inclined to a respective plane passing through the portion 352 and including the axis X at a common angle in the range -35° to +90°. The outer radial edge 339 of the planar, laminar portion 339 has a radial span d" at the common first axial position 135 and increases linearly with axial position to a value b" at a first intermediate axial position 356. The radial span of the portion 339 is constant between the first intermediate axial position 356 and a second intermediate axial position 358 downstream of the first intermediate axial position 356. The radial span of the portion 352 decreases linearly with axial position from the value b" at the second intermediate axial position 358 to the value d" at the common second axial position 137.

The radial spans b, b', b" of the vortex-generating elements 133, 233, 333 are preferably less than or equal to 20% of the radial span of the fan blades 131 with respect to the inner gas annulus profile surface of the fan unit 112.

In variants of the vortex-generating elements 133, 233, 333 the planar, laminar portions 152, 252, 352 are inclined to their respective base portions 154, 254, 354 rather than perpendicular to them. When such an element is attached to the outer surface 138 of the nose-cone 130, the planar, laminar portion is locally inclined to the surface 138; when viewed from the direction C, the outer radial edge of the portion would be inclined as described above to a plane passing through the portion and containing the axis X.

In Figures 2, 3 and 4 the nose-cone 130 terminates at the axial position 140 of the leading edges of the fan blades 131 and the inner gas annulus profile surface downstream of this position is formed by the outer surfaces of the annulus fillers 132. However in variants of the fan unit 112, the nose-cone may terminate upstream of the position of the leading edges of the fan blades and the annulus fillers may extend upstream of this position. In such a case, the vortex-generating elements may be carried on the annulus fillers rather than on the nose-cone of the fan unit.

During operation of an engine comprising the fan unit 112, any given vortex-generating element 133 generates a vortex which extends downstream of the element and between the pair of fan blades 131 which are adjacent in azimuth to the vortex-generating element 133. This vortex is attracted to the suction surface of one of the pair of fan blades due to a static pressure gradient created by the fan blades and interacts with a secondary loss core vortex at that suction surface near the outer surface of the annulus filler extending between the fan blades, changing the intensity of the secondary loss core. Mixing of the secondary loss core occurs more rapidly than is the case in a fan unit lacking the vortex-generating elements 133 and the amplitude of pressure oscillations downstream of the fan unit is thereby reduced. The reduction in the amplitude of pressure oscillations downstream of the fan unit 112 reduces the incidence of resonant vibration of compressor blades within a compressor of the engine located downstream of the fan unit 112. The rate at which damage is caused to the compressor blades by resonant vibration is therefore reduced and such damage may in some cases be eliminated.

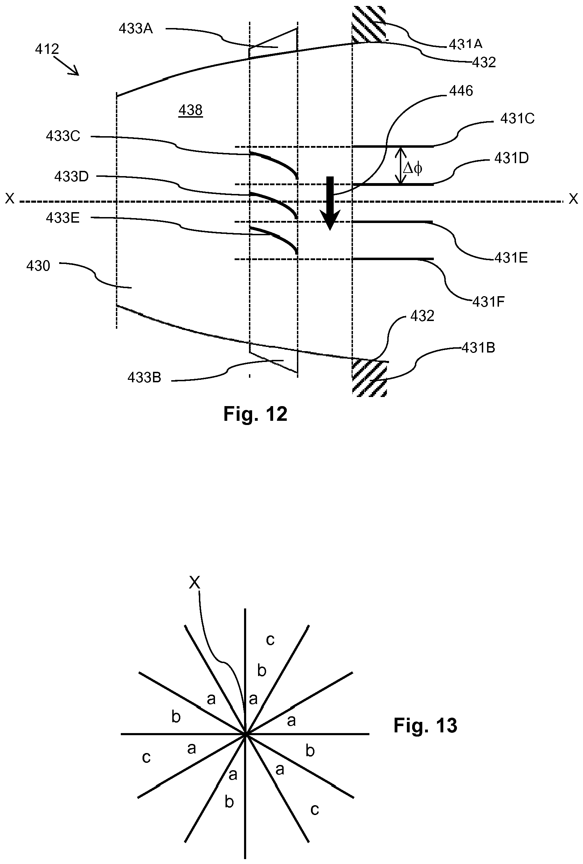

Figure 12 shows a side view of a portion of a fan unit 412 according to another example. Parts of the fan unit 412 are labelled with reference signs differing by 300 from those labelling corresponding parts in Figure 3. The fan unit 412 comprises a plurality of vortex-generating elements such as 433A, B, C, D, E. Each element 433 comprises a base portion by which it is attached to outer surface 438 of nose-cone 430 and a laminar portion which extends radially outwards from the outer surface 438 of the nose-cone 430. The laminar portion of each vortex-generating element 433 is locally normal to the outer surface 438 of the nose-cone 430, however it is curved rather than planar. The intersection of a laminar portion of a vortex-generating element 433 with the outer surface 438 of the nose-cone 430 therefore defines a curved path which is inclined along its length to a plane which passes through the element and contains the rotational axis X of the fan unit 412.

In other example fan units, the number of vortex-generating elements is less than the number of fan blades. For example for an even number of fan blades, which is typical, the number of vortex-generating elements may be half the number of fan blades, with one vortex-generating element being located in azimuth between the azimuthal positions of the roots of every other pair of fan blades, moving clockwise or anti-clockwise around a fan (viewed from either the front or rear of the fan). For an even number of fan blades which is divisible by three, for example 6, 12, 18, 24, 30 or 36 fan blades, one vortex-generating element may be located in azimuth between the azimuthal positions of the roots of every third pair of fan blades. For a number of fan blades which is divisible by four, one vortex-generating element may be located in azimuth between the azimuthal positions of the roots of every fourth pair of fan blades. Figure 13 schematically shows a front view of a fan unit having 12 fan blades, with the azimuthal positions of the roots of the leading edges of the fan blades shown by straight lines extending radially from the rotation axis X of the fan. The azimuthal locations of vortex-generating elements in the cases of three different example fan units are indicated by letters a, b and c respectively. a, b, c indicate vortex-generating elements located in azimuth between every second, third and fourth pair of fan blades respectively, moving clockwise or anti-clockwise around the fan. In each case the vortex-generating elements may or may not be uniformly distributed in azimuth; i.e. Figure 13 only indicates the azimuthal position of a given vortex-generating element in so far as which pair of fan blades that vortex-generating is located between. The arrangements of Figure 13 cause the amplitude of pressure oscillations downstream of the fan unit to be reduced to a lesser extent than for the case where a vortex-generating element is provided between every pair of fan blades; however the reduction is sufficient either to eliminate fan-wake damage to compressor blades or at least reduce the rate at which such damage occurs. In some engines there may be a trade-off between the number of vortex-generating elements provided and the rate of fan wake-induced mechanical degradation of compressor blades, allowing factors such as weight, cost and fitting time etc related to the number of vortex-generating elements to be traded off against the extent to which the rate of fan-wake-induced mechanical degradation of compressor blades is reduced.

Other examples of the invention are as follows:
Example a: A nose-cone for a fan unit, the nose-cone comprising a plurality of vortex-generating elements each of which is arranged to generate a respective vortex during rotation of the nose-cone about its rotation axis.
Example b: A nose-cone according to example a wherein each vortex-generating element comprises a laminar element which extends radially outwards from the outer surface of the nose-cone and extends axially between a first axial position and a second axial position such that the path defined by the intersection of the laminar element and the outer surface of the nose-cone is inclined along its length to a plane passing through the laminar element and including the rotation axis of the nose-cone.
Example c: A nose-cone according to example b wherein the paths defined by the intersections of the laminar elements and the outer surface of the nose cone are curved and each laminar element is locally normal to the outer surface of the nose-cone.
Example d: A nose-cone according to example b wherein the paths defined by the intersections of the laminar elements and the outer surface of the nose cone are straight and each laminar element is planar.
Example e: A nose-cone according to example d wherein the laminar elements are each locally normal to the outer surface of the nose-cone.
Example f: A nose-cone according to example d or example e wherein the intersection of any given laminar element and the outer surface of the nose-cone defines a path which is inclined at an angle θ to a plane passing through the laminar element and including the rotation axis of the nose-cone where -35° ≤ θ ≤ +90°.
Example g: A nose-cone according to example b wherein each laminar element extends axially between a common first axial position and a common second axial position.
Example h: A nose-cone according to example g wherein the common first axial position is upstream of the common second axial position and wherein the radial span of any given laminar element with respect to the outer surface of the nose-cone increases linearly with axial position from a first value at the first axial position to a second value at the second axial position.
Example i: A nose-cone according to example g or example h wherein the vortex-generating elements are distributed uniformly in azimuth.
Example j: A turbofan engine comprising a fan unit as described above.
Example k: A turbofan engine comprising a nose-cone according to any of examples a to i.
Example I: A fan unit comprising a nose-cone according to any of examples a to i.

The invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A fan unit (112; 412) for a turbofan engine, the fan unit comprising a plurality of fan blades (131; 431) mounted to a fan disc unit (132, 148) and a plurality of vortex-generating elements (133; 433) each of which is arranged to generate a respective vortex extending axially between a respective pair of adjacent fan blades during rotation of the fan unit about its rotation axis (X) and optionally or preferably wherein:
(a) an outer surface of the fan disc unit defines an inner annulus profile surface of the fan unit and each of the vortex-generating elements is arranged to generate a vortex extending axially between a respective pair of adjacent fan blades at or adjacent the inner annulus profile surface during rotation of the fan unit about its rotation axis, and/or
(b) each vortex-generating element is located axially upstream of the leading edges of a respective pair fan blades.

2. A fan unit according to claim 1 wherein each vortex-generating element is located in azimuth between azimuthal positions of a respective pair of adjacent fan blades.

3. A fan unit according to claim 1 or claim 2 wherein either:
(a) the number of vortex-generating elements is equal to the number of fan blades; or
(b) the fan unit has n fan blades, where n is even and
(i) there are n/2 vortex-generating elements, with one vortex-generating element being located in azimuth between the azimuthal positions of the roots of every other pair of fan blades; or
(ii) there are n/3 vortex-generating elements, with one vortex-generating element being located in azimuth between the azimuthal positions of the roots of every third pair of fan blades; or
(iii) there are n/4 vortex-generating elements, with one vortex-generating element being located in azimuth between the azimuthal positions of the roots of every fourth pair of fan blades.

4. A fan unit according to any preceding claim wherein the vortex-generating elements are uniformly distributed in azimuth.

5. A fan unit according to any preceding claim wherein the vortex-generating elements are each arranged to generate a respective vortex which rotates in the same sense as vortices generated at the suction sides of the fan blades during rotation of the fan unit about its rotation axis.

6. A fan unit according to any of claims 1 to 4 wherein the vortex-generating elements are each arranged to generate a respective vortex which rotates in the opposite sense to that of the vortices generated at the suction sides of the fan blades during rotation of the fan unit about its rotation axis.

7. A fan unit according to any preceding claim wherein each vortex-generating element comprises a laminar element which extends radially outwards from an inner annulus profile surface defined by an outer surface of the fan disc unit and extends axially between a first axial position and a second axial position such that the path defined by the intersection of the laminar element and the inner annulus profile surface is inclined along its length to a plane passing through the laminar element and including the rotation axis of the fan unit and optionally or preferably wherein:
(a) the first and second axial positions are upstream of the fan blades; and/or
(b) each vortex-generating element is located in azimuth between a respective pair of fan blades.

8. A fan unit according to claim 7 wherein the paths defined by the intersections of the laminar elements and the inner annulus profile surface are curved and each laminar element is locally normal to the inner annulus profile surface.

9. A fan unit according to claim 7 wherein the paths defined by the intersections of the laminar elements and the inner annulus profile surface are straight and each laminar element is planar.

10. A fan unit according to claim 9 wherein the laminar elements are each locally normal to the inner annulus profile surface.

11. A fan unit according to claim 10 wherein each laminar element extends axially between a common first axial position and a common second axial position.

12. A fan unit according to claim 11 wherein the intersection of any given laminar element and the inner annulus profile surface defines a path which is inclined at an angle θ to a plane passing through the laminar element and including the rotation axis of the fan where -35° ≤ θ ≤ +90°.

13. A fan unit according to claim 11 or claim 12 wherein:
(a) the common first axial position is upstream of the common second axial position and wherein the radial span of any given laminar element with respect to the inner annulus profile surface increases linearly with axial position from a first value at the first axial position to a second value at the second axial position and optionally or preferably wherein the outer radial edge of each laminar element is locally inclined to the inner annulus profile surface at angle α in the range 0° ≤ α ≤ 45°; or
(b) the common first axial position is upstream of the common second axial position and wherein the radial span of any given laminar element with respect to the inner annulus profile surface has a first value at the first axial position, a second value at the second axial position, increases linearly with axial position from the first value at the first axial position to the second value at an intermediate axial position which is intermediate the first and second axial positions and is constant and equal to the second value between the intermediate axial position and the common second axial position; or
(c) the common first axial position is upstream of the common second axial position and wherein the radial span of any given laminar element with respect to the inner annulus profile has a first value at the first and second common axial positions, increases linearly with axial position from the first value at the first common axial position to a second value at a first intermediate axial position, is constant and equal to the second value between the first intermediate axial positon and a second intermediate axial position downstream of the first intermediate axial position, and decreases linearly with axial position from the second value to the first value between the second intermediate axial position and the common second axial position.

14. A fan unit according to claim 13 wherein the maximum radial span of the laminar elements with respect to the inner annulus profile surface is less than or equal to 20% of the radial span of the fan blades with respect to the inner annulus profile surface.

15. A fan unit according to any preceding claim wherein either:
(a) the fan unit comprises a plurality of annulus fillers each of which extends in azimuth between a respective pair of fan blades, wherein the outer surfaces of the annulus fillers collectively form an outer surface of the fan disc unit, which outer surface defines an inner annulus profile surface of the fan disc unit, and wherein each vortex-generating element is attached to or integral with an annulus filler and extends radially outwards from the outer surface of the annulus filler; or
(b) each vortex-generating element is attached to or integral with the nose-cone of the fan unit.
